## Europäisches Patentamt
## European Patent Office
## Office européen des brevets

(19)

(11) Publication number: **0 009 862**
**B1**

(12) **EUROPEAN PATENT SPECIFICATION**

(45) Date of publication of patent specification: **15.09.82**

(51) Int. Cl.³: **G 06 F 1/00, G 06 F 3/00**

(21) Application number: **79301475.4**

(22) Date of filing: **25.07.79**

(54) **Programmable mode of operation select by reset and data processor using this select.**

(30) Priority: **05.09.78 US 939721**

(43) Date of publication of application:
**16.04.80 Bulletin 80/8**

(45) Publication of the grant of the patent:
**15.09.82 Bulletin 82/37**

(84) Designated Contracting States:
**DE FR GB**

(56) References cited:
**DE - A - 2 400 244**
**FR - A - 2 291 540**
**US - A - 3 512 133**
**US - A - 3 898 623**

(73) Proprietor: **MOTOROLA, INC.**
**4350 East Camelback Road Suite 200F**
**Phoenix, Arizona 85018 (US)**

(72) Inventor: **Shaw, Pern**
**9003 Viking Drive**
**Austin, Texas 78758 (US)**
Inventor: **Wiles, Michael Frederick**
**1902 Flintrock Street**
**Round Rock, Texas 78664 (US)**
Inventor: **Tietjen, Donald Louis**
**1200 Barton Hills Drive Apt. 185**
**Austin, Texas 78704 (US)**

(74) Representative: **Newens, Leonard Eric et al,**
**F.J. CLEVELAND CO. 40/43 Chancery Lane**
**London WC2A 1JQ (GB)**

Courier Press, Leamington Spa, England.

Programmable mode of operation select by reset and data processor
using this select

This invention relates generally to a data processor and more particularly to circuitry for selecting the mode of operation for a data processor.

Applications for integrated circuit data processors are rapidly increasing. Various applications for these data processor devices may require varying configurations of the input-output circuitry associated with a data processor device. In order for a single data processor device to be employed within these varying applications, the input-output circuitry of a data processor must be flexible such that it can be programmed to satisfy the needs of any particular applications.

One prior art approach for providing various configurations of the input-output circuitry for a data processor is to provide a plurality of mask options which vary the integrated circuit metal interconnections during processing such that a particular metal mask is used to provide an integrated circuit data processor of the desired configuration. However, this approach results in higher costs for processing, testing, and inventory control since each mask option results in a unique integrated circuit. Another prior art approach is to make the configuration of the processor device software programmable such that instructions are stored in a program memory which must be executed by the processor to achieve the desired configuration of the input-output circuitry for the data processor device. However, this approach increases the number of storage locations required for the program memory. A third prior art approach is to hardware-program the mode of operation by providing separate program selection inputs to the data processor for configuring the input-output circuit. This approach is also costly in that additional package pins are required for the integrated circuit device in order to determine the mode of operation.

It is an object of the present invention to provide circuitry for selecting the mode of operation for a data processor while avoiding the need for mask options, additional software, or extra integrated circuit package pins.

It is a further object of the present invention to provide circuitry which selects the mode of operation for a data processor whenever the data processor is powered-up or restarted.

According to one aspect of the present invention there is provided a data processor of the type which includes storage elements for storing digital information, the data processor including reset circuitry for receiving a reset signal, the reset circuitry being responsive to the reset signal for causing the storage elements to store predetermined digital information and for initiating execution of instructions stored in a memory, the data processor also including input-output circuitry having at least one terminal for transmitting at least one digital signal, the at least one digital signal having first and second logic states characterized by:

mode selection circuitry coupled to the at least one terminal and being responsive to the reset signal for storing the logic state of the at least one digital signal immediately prior to the initiation of execution of the instructions stored in the memory.

According to a further aspect of the invention there is provided a circuit adapted for implementation within an integrated circuit data processor and suitable for selecting a mode of operation for the data processor, including

a first terminal for receiving a reset signal, the reset signal having a voltage ranging between a first and a second voltage level; and

reset circuitry coupled to the first terminal and responsive to the reset signal for generating a control signal when the reset signal voltage reaches a first predetermined voltage, the control signal being operative to initialize the data processor; characterized by:

a) a second terminal capable of receiving a mode selection signal as a voltage, the mode selection signal having first and second logic states; and

b) mode selection circuitry coupled to the first terminal and coupled to the second terminal, the mode selection circuitry including a level detector for generating an output signal when the reset signal voltage equals a second predetermined voltage, and the mode selection circuitry also including storage circuitry responsive to the output signal for storing the logic state of the mode selection signal when the output signal is generated.

In one embodiment of the invention there is provided a circuit adapted for implementation within an integrated circuit data processor, the circuit including a reset terminal for receiving a reset signal, circuitry responsive to the reset signal for causing initialization of the data processor, one or more input-output terminals which are generally used to transmit digital information to and from the data processor but receive one or more mode selection signals when the data processor is being reset, a level detector responsive to the reset signal which generates an output signal when the reset voltage reaches a predetermined level, and storage circuitry adapted for storing the one or more mode selection signals when the level detector generates the output signal. In the preferred embodiment, level shifting circuitry is included which shifts the voltage level of the mode selection signal such that the mode selection signal may be generated by either connecting a diode between the input-output terminal and the reset terminal for causing a mode selection signal to assume a first logic state or omitting the diode and causing the mode selection signal to assume the second logic state.

The invention will now be described by way of example only with particular reference to the accompanying drawings wherein:

Fig. 1 is a circuit schematic including a block of circuitry conventionally associated with an input-output pin of a data processor together with a block of circuitry for storing a mode selection signal;

Fig. 2 is a circuit schematic of circuitry associated with the reset terminal including a block of circuitry for generating a control signal to initialize the data processor, a block of circuitry used to implement the mode selection feature, and a bias chain block;

Fig. 3 illustrates timing waveforms for various signals generated by the circuitry shown in Figs. 1 and 2 and

Fig. 4 is a block diagram illustrating an application of the mode selection circuitry for selecting the configuration of a data processor.

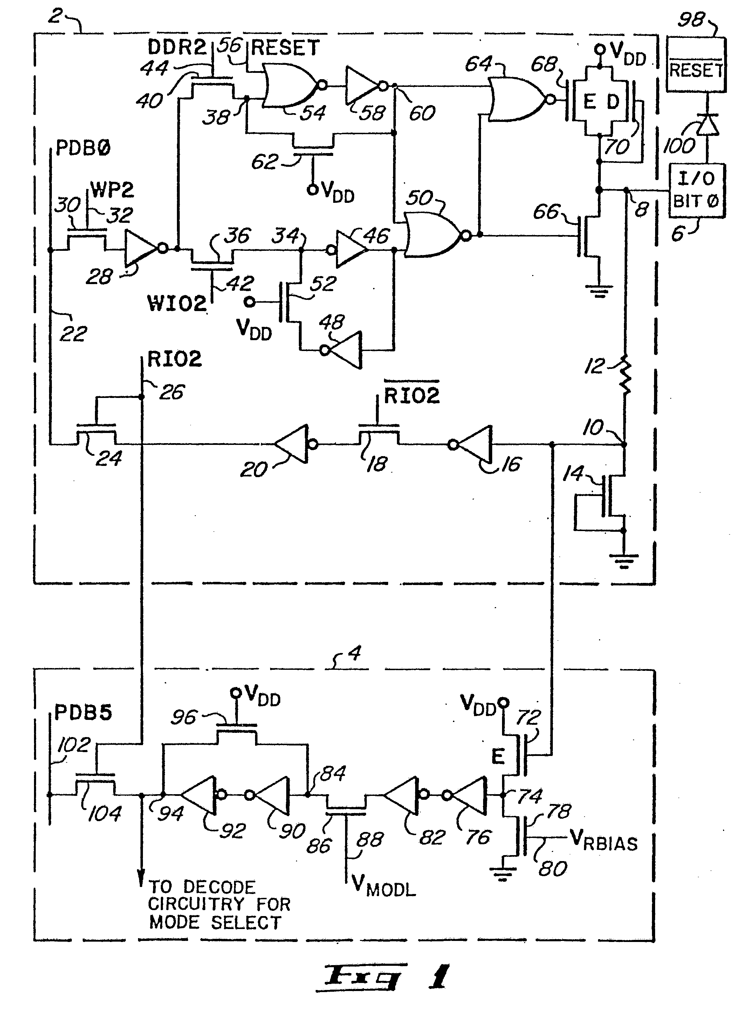

Fig. 1 is a circuit schematic of circuitry associated with an input-output terminal of a data processor including conventional input-output circuitry within dashed block 2 and mode selection circuitry within dashed block 4. Input-output terminal 6 is coupled to node 8, and node 8 is coupled to node 10 by resistor 12. MOSFET device 14 has its drain coupled to node 10 while the gate and source are coupled to ground potential. Since the operation of MOSFETs (metal-oxide-semiconductor field-effect transistors) is well-known by those skilled in the art, it will not be described in further detail herein. For an explanation of the operation of MOSFETs, see "Physics and Technology of Semiconductor Devices" by A. S. Grove, John Wiley and Sons, Inc., 1967. MOSFET device 14 serves as an input protection device so as to prevent the potential at node 10 from becoming so negative as to cause damage to other devices within the circuit. Node 10 is coupled to the input of inverter 16 which has an output coupled to one terminal of MOSFET device 18. The gate terminal of MOSFET 18 is coupled to control signal $\overline{R102}$ such that MOSFET 18 is conductive when control signal $\overline{R102}$ is at a high level. A third terminal of MOSFET 18 is coupled to the input of inverter 20. The output of inverter 20 is coupled to PDBO conductor 22 by MOSFET 24. The gate terminal of MOSFET 24 is coupled to conductor 26 which conducts a control signal R102 such that MOSFET 24 is conductive when R102 is at a high level.

Conductor 22 corresponds to the least significant bit of a data bus within the data processor in the preferred embodiment of the invention. PDBO conductor 22 may be used to transfer digital information between input/output circuitry block 2 and working registers (not shown) within the data processor. In order to transfer digital information from input/output pin 6 to PDBO conductor 22, control signal $\overline{R102}$ is initially at a high level while control signal R102 is initially at a low level. The signal received by input/output pin 6 is coupled to the input of inverter 16 by resistor 12, and the inverted output signal is coupled to the input of inverter 20 by MOSFET 18. Subsequently, control signal $\overline{R102}$ switches to a low level while control signal R102 switches to a high level such that MOSFET 18 turns off while MOSFET 24 becomes conductive. The inverted signal initially coupled to the input of inverter 20 by MOSFET 18 is dynamically stored on the input of inverter 20 after MOSFET 18 is turned off. The output of inverter 20 is then coupled by MOSFET 24 to PDBO conductor 22 in order to complete the transfer of the digital information to the internal data bus.

PDBO conductor 22 is also coupled to the input of inverter 28 by MOSFET 30. The gate terminal of MOSFET 30 is coupled to conductor 32 which conducts control signals WP2 such that MOSFET 30 is conductive when WP2 is at a high level. The output of inverter 28 is coupled to node 34 by MOSFET 36 and is also coupled to node 38 by MOSFET 40. The gate terminal of MOSFET 36 is coupled to conductor 42 which conducts control signal W102 such that MOSFET 36 is conductive when W102 is at a high level. The gate terminal of MOSFET 40 is coupled to conductor 44 which conducts control signal DDR2 such that MOSFET 40 is conductive when DDR2 is at a high level. Node 34 is coupled to the input of inverter 46 which has an output coupled to the input of inverter 48 and to a first input of NOR gate 50. The output of inverter 48 is coupled to node 34 by MOSFET 52 which has its gate terminal coupled to positive supply voltage $V_{DD}$. Inverter 46, inverter 48, and MOSFET 52 form a feedback latching circuit.

Node 38 is coupled to a first input of NOR gate 54 while the second input of gate 54 is coupled to conductor 56 which conducts control signal RESET. The output of gate 54 is coupled to the input of inverter 58 which has an output coupled to node 60. Node 60 is coupled to node 38 by MOSFET 62 which has a gate terminal coupled to the positive supply voltage $V_{DD}$. NOR gate 54, inverter 58, and MOSFET 62 form a feedback latching circuit which may be a portion of a data direction register as will be explained later. Node 60 is coupled to the second input of gate 50 and is also coupled to a first input of NOR gate 64. The output of gate 50 is coupled to the second input of gate 64 and to the gate terminal of MOSFET 66. The source of MOSFET 66 is coupled to ground potential while the drain of MOSFET 66 is coupled to node 8. The output of gate 64 is coupled to the gate terminal of enhancement mode MOSFET 68 which has its drain terminal coupled to the positive supply voltage $V_{DD}$ and its source coupled to node 8. A depletion mode MOSFET 70 has a drain terminal coupled to the positive supply voltage $V_{DD}$ while its gate and source terminals are coupled to node 8.

When input/output pin 6 is to function in the input node, then MOSFET 66 and MOSFET 68 are turned off such that node 8 is allowed to appear as a high impedance. When node 60 is at a high level or logic "1", then gate 64 and gate 50 both output a low level such that MOSFET devices 66 and 68 are cut off. When the data processor is first powered-up or when the $\overline{\text{RESET}}$ input pin 98 is strobed, the RESET control signal coupled to conductor 56 assumes a logic "1" level which causes the data direction register latch formed by gates 54, 58 and MOSFET 62 to store a logic "1" on node 60. Thereafter, in order to allow input/output pin 6 to function as an output, the data direction register must be caused to store a logic "0" on node 60. This may be accomplished by providing a logic "1" level on conductor 22 and enabling MOSFET 30 and MOSFET 40 by causing control signal WP2 and control signal DDR2 to be at a high level. Once the data direction register is programmed for the output mode, the logic state of input/output pin 6 is determined by the logic state stored by the latch formed by gates 46, 48 and MOSFET 52. The logic state on PDBO conductor 22 will be copied into the latch by enabling MOSFETs 30 and 36 by forcing control signal WP2 and W102 to a high level. The decoder circuitry for generating the various control signals is conventional and will not be described herein.

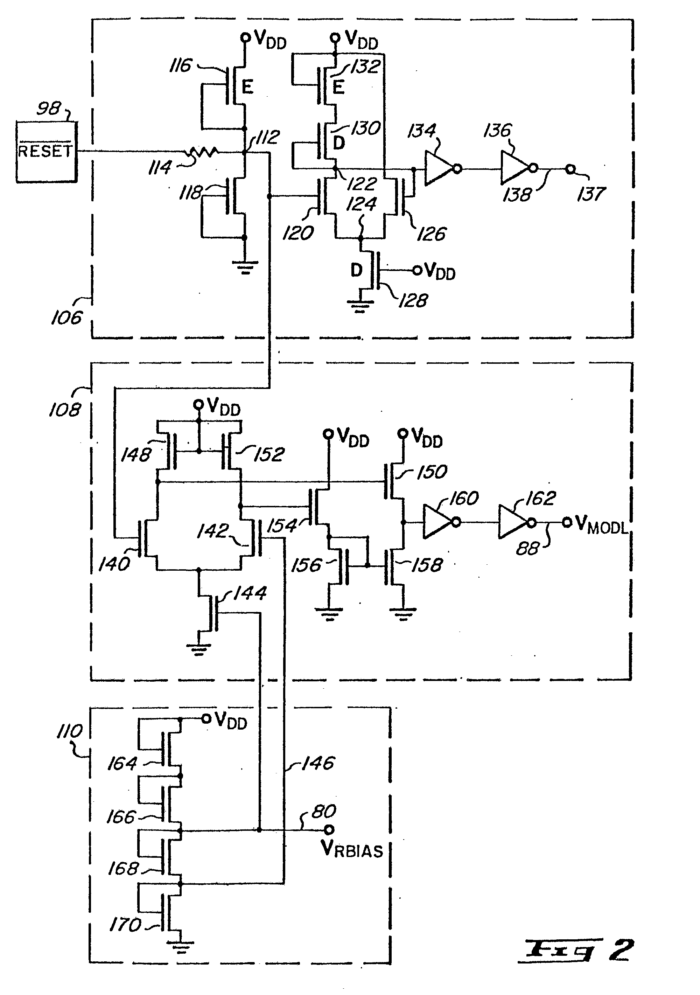

Node 10 is also coupled to enhancement mode MOSFET 72 within dashed block 4. The drain of MOSFET 72 is coupled to the positive supply voltage $V_{DD}$ and the source is coupled to node 74. Node 74 is coupled to the input of inverter 76 and is also coupled to the drain of MOSFET 78. The source of MOSFET 78 is coupled to ground potential while the gate terminal is coupled to conductor 80 which conducts a bias voltage which will be later discussed with reference to Fig. 2. MOSFET 72 acts as a level shifter or source-follower while MOSFET 78 acts as a current source.

The output of inverter 76 is coupled to the input of inverter 82. The output of inverter 82 is coupled to node 84 by MOSFET 86. The gate terminal of MOSFET 86 is coupled to conductor 88 which conducts a control signal $V_{MODL}$ which will be later discussed with reference to Fig. 2. Node 84 is coupled to the input of inverter 90, and the output of inverter 90 is coupled to the input of inverter 92. The output of inverter 92 is coupled to node 94, and node 94 is coupled to node 84 by feedback MOSFET 96. The gate terminal of MOSFET 96 is coupled to the positive supply voltage $V_{DD}$ such that inverter 90, inverter 92, and MOSFET 96 form a feedback latching circuit. The logic state stored by the latching circuit can be initialized by causing control signal $V_{MODL}$ to be a high level such that MOSFET 86 is made conductive. At such time, the voltage at input/output pin 6 will determine the logic state stored by the latching circuit.

As will be later explained, the mode programming latch register formed by inverter 90, inverter 92 and MOSFET 96 is initialized when the data processor is reset. Shown in Fig. 1 is $\overline{\text{RESET}}$ input pin 98 and a diode 100 having its anode coupled to input/output pin 6 and its cathode coupled to $\overline{\text{RESET}}$ pin 98. Diode 100 would be included if it is desired to store a logic "0" in the mode programming latch register. In this event, when $\overline{\text{RESET}}$ pin 98 goes to a low level in order to reset the data processor, then diode 100 pulls pin 6 to within .7 volt of a low logic level. Level shifting MOSFET 72 translates the voltage on pin 6 by one MOSFET threshold drop to a more negative voltage such that the input of inverter 76 recognizes the voltage on pin 6 as a low level. If it is desired for the mode programming latch register to latch a logic "1" level, then diode 100 is omitted and depletion mode pullup MOSFET 70 establishes a high level on pin 6.

In the preferred embodiment, the output of mode programming latch register node 94 is coupled to decoder circuitry for controlling the configuration of the data processor circuit. Also, the output of mode programming latch register node 94 is coupled to PDB5 conductor 102 by MOSFET 104 such that the status of the mode programming latch register can be accessed by the internal data bus of the data processor. The gate terminal of MOSFET 104 is coupled to conductor 26 such that MOSFET 104 is conductive when control signal R102 is at a high level.

In Fig. 2, circuitry for generating a reset signal to initialize the data processor is shown within block 106. Within block 108, circuitry is shown for generating the control signal $V_{MODL}$ already referred to within Fig. 1. Also within dashed block 110, bias circuitry is shown for generating various bias points. $\overline{\text{RESET}}$ input pin 98 is coupled to node 112 by input resistor 114. Node 112 is coupled to the gate and source terminals of enhancement mode MOSFET 116 which has its drain terminal coupled to the positive supply voltage $V_{DD}$. Node 112 is also coupled to the drain terminal of enhancement mode MOSFET 118 which has its gate and source terminals coupled to ground potential. MOSFETs 116 and 118 are input protection devices and serve to limit the magnitude of the voltage on node 112 so as to protect other MOSFET devices coupled to this node.

Node 112 is coupled to the gate terminal of MOSFET 120 which has its drain terminal coupled to node 122 and its source terminal coupled to node 124. Node 124 is coupled to the source terminal of depletion mode MOSFET 126 and to the drain terminal of MOSFET 128. MOSFET 128 has its gate terminal coupled to the positive supply voltage $V_{DD}$ and its source terminal coupled to ground potential such that MOSFET 128 functions as a current source. MOSFET 126 has its drain coupled to the positive supply voltage $V_{DD}$ and its gate terminal coupled to node 122. Node 122 is also coupled to the source and gate terminals of depletion mode MOSFET 130 which has its drain terminal coupled to the source terminal of enhancement mode MOSFET 132. The gate and drain terminals of MOSFET 132 are coupled to the positive supply voltage $V_{DD}$. MOSFET 120 and 126 form a differential amplifier connected as a Schmidt trigger circuit. The voltage on the gate terminal of MOSFET 126 varies as the drain current from MOSFET 128 is switched between MOSFET 120 and MOSFET 126 so as to provide hysteresis. Node 122 is also coupled to the input of inverter 134, which has an output coupled to the input of inverter 136. The output of inverter 136 is coupled to terminal 137 by conductor 138. Terminal 137 may be coupled to synchronization circuitry (not shown) such that the asynchronous reset signal provided by terminal 137 may by sychronized with clock signals generated within the data processor to provide a synchronized RESET signal. The synchronized RESET signal may then be used to clear the registers within the data processor and to initiate execution of instruction stored in the program memory. As shown in Fig. 1, the synchronized RESET signal may also be used to initialize the data direction register which controls input/output circuitry.

Node 112 is also coupled to the gate terminal of MOSFET 140 within dashed block 108. The source terminal of MOSFET 140 is coupled to the source terminal of MOSFET 142 and to the drain terminal of MOSFET 144. The gate terminal of MOSFET 144 is coupled to conductor 80 which provides a first bias voltage $V_{RBIAS}$. The source of MOSFET 144 is coupled to ground potential such that MOSFET 144 functions as a current source. The gate terminal of MOSFET 142 is coupled to conductor 146 which provides a second bias voltage. MOSFET 140 and MOSFET 142 function as a differential comparator circuit for comparing the voltage on node 112 to the bias voltage provided by conductor 146.

The drain of MOSFET 140 is coupled to the source terminal of enhancement mode MOSFET 148 which has its gate and drain terminals coupled to the positive supply voltage $V_{DD}$ such that MOSFET 148 functions as a load impedance. The drain of MOSFET 140 is also coupled to the gate terminal of MOSFET 150. The drain terminal of MOSFET 142 is coupled to the source terminal of enhancement mode MOSFET 152 which has its gate and drain terminals coupled to the positive supply voltage $V_{DD}$. The drain terminal of MOSFET 142 is also coupled to the gate terminal of MOSFET 154. MOSFET 154 has its drain terminal coupled to the positive supply voltage $V_{DD}$, and its source terminal is coupled to the gate and drain terminals of MOSFET 156 as well as to the gate terminal of MOSFET 158. The source terminal of MOSFET 156 and the source terminal of MOSFET 158 are coupled to ground potential such that MOSFET 156 and MOSFET 158 form a current mirror arrangement. The drain terminal of MOSFET 158 is coupled to the source of MOSFET 150 and to the input of inverter 160. The drain of MOSFET 150 is coupled to the positive supply voltage $V_{DD}$. The output of inverter 160 is coupled to the input of inverter 162, and the output of inverter 162 is coupled to conductor 88 for providing the control signal $V_{MODL}$.

Within block 110 is a bias chain formed by a plurality of series connected MOSFET devices coupled between positive supply terminal $V_{DD}$ and ground. MOSFET 164 has its gate and drain terminals coupled to the positive supply voltage $V_{DD}$, while the source terminal of MOSFET 164 is coupled to the gate and drain terminals of MOSFET 166. The source of MOSFET 166 is coupled to conductor 80 for providing bias voltage $V_{RBIAS}$. The source of MOSFET 166 is also coupled to the gate and drain terminals of MOSFET 168, and the source of MOSFET 168 is coupled to conductor 146 for providing a second bias voltage. The source of MOSFET 168 is also coupled to the gate and drain terminals of MOSFET 170 and the source of MOSFET 170 is coupled to ground potential.

The comparator circuit or level detector shown within dashed block 108 functions in the following manner. If the voltage on RESET pin 98 is less than the bias voltage provided by conductor 146, then MOSFET 140 will be non-conductive, while the drain terminal of MOSFET 142 will conduct the current provided by MOSFET 144. The current conducted by MOSFET 142 pulls the source of MOSFET 152 to a low level, thereby cutting off MOSFET 154. The source terminal of MOSFET 148 pulls the gate of MOSFET 150 to a high level, thereby allowing MOSFET 150 to conduct. Since MOSFET 154 is non-conductive, no bias current is provided to MOSFET 156, and MOSFET 158 is non-conductive. Thus, the input to inverter 160 is a high level. However, when the voltage on the RESET input pin 98 rises above the bias voltage on conductor 146, MOSFET 140 is conductive and MOSFET 142 is non-conductive. In this case, the gate terminal of MOSFET 150 is pulled down to a low level, while the gate terminal of MOSFET 154 is pulled up to a high level. MOSFET 156 is made conductive by the current supplied by MOSFET 154, and MOSFET 158 is made conductive by the gate to source voltage developed across MOSFET 156. The input to inverter 160 is now a low level.

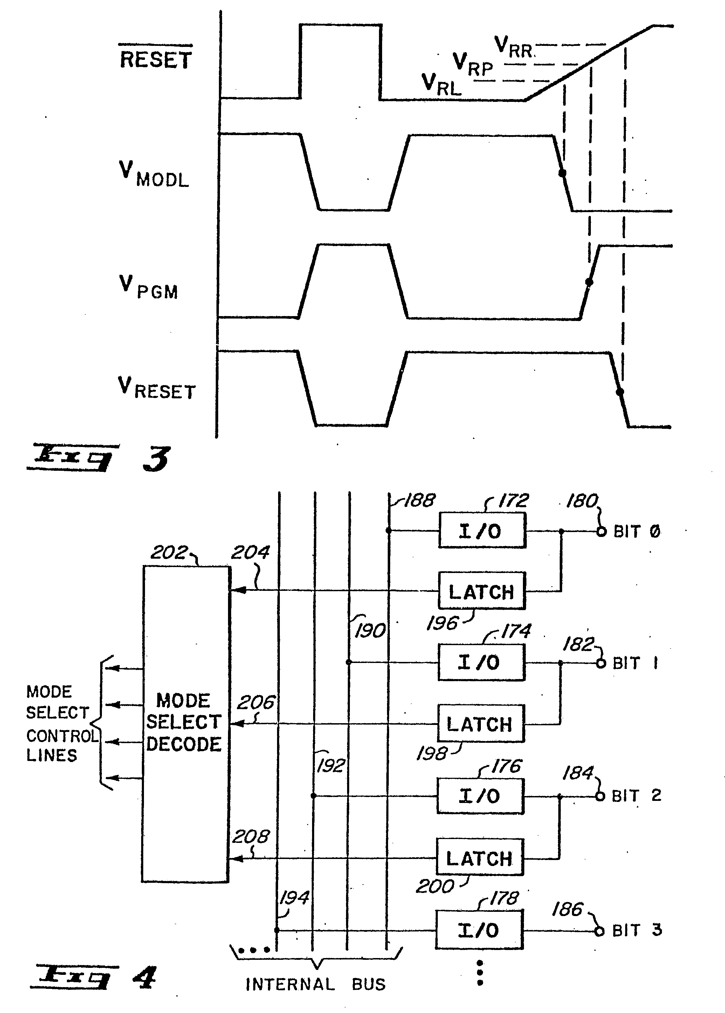

In Fig. 3, timing waveforms are shown for the voltage at the RESET input pin as well as voltages for other points in the circuit. Two cases are shown for the RESET input voltage. In the first case, an input pulse with relatively fast rising and falling edges is shown which may correspond to the voltage produced by the output of a TTL (transistor-transistor logic) logic circuit. In the second case, a slowly rising input voltage is shown which may correspond to the voltage produced on the $\overline{\text{RESET}}$ input pin when this input pin is coupled to the positive supply voltage $V_{DD}$ by an appropriate RC network. Such a connection might be desired to automatically reset the data processor whenever the data processor is initially coupled to the power supply voltage.

As the $\overline{\text{RESET}}$ input pin voltage rises, the Schmidt trigger circuit shown within dashed block 106 (Fig. 2) will switch when the input voltage reaches a predetermined voltage. In Fig. 3, this predetermined voltage ($V_{RR}$) is roughly 3.3 volts in the preferred embodiment. The waveform labeled $V_{RESET}$ in Fig. 3 shows the voltage provided by terminal 137 in the Schmidt trigger circuitry of Fig. 2, and it will be noted that this voltage switches to a low level when the $\overline{\text{RESET}}$ input voltage reaches the $V_{RR}$. Prior to the time that the $\overline{\text{RESET}}$ input voltage reaches $V_{RR}$, the input/output circuitry associated with pin 6 (Fig. 1) is forced to be in the input mode. However, once the $\overline{\text{RESET}}$ input voltage surpasses $V_{RR}$, the software instructions executed by the data processor may change the input/output circuitry associated with pin 6 to select the output mode of operation. Thus, it is necessary to latch the logic state on pin 6 into the mode programming latch register before the data processor begins execution of the restart software routine. The level detector circuit within dashed block 108 of Fig. 2 functions to latch the mode programming latch register prior to the time that the data processor reset signal $V_{RESET}$ switches to a low level. The waveform labelled $V_{MODL}$ shows the voltage produced on conductor 88 by the level detector circuitry within dashed block 108 in Fig. 2. The bias voltage provided by conductor 146 is selected such that $V_{MODL}$ switches to a low level when the $\overline{\text{RESET}}$ input voltage reaches voltage $V_{RL}$ which, in the preferred embodiment, is roughly 1 volt. When $V_{MODL}$ switches to a low level, the input to the mode programming latch register is disabled such that the mode of operation is selected before the restart software routine can alter input/output pin 6 to assume the output mode of operation.

As previously mentioned, one method of programming input/output pin 6 to be a low level during mode selection is to connect a diode from pin 6 to the $\overline{\text{RESET}}$ input pin 98. This feature imposes the constraint that the mode programming latch register must latch the low logic level on pin 6 before the $\overline{\text{RESET}}$ input voltage rises sufficiently positive to make the voltage on pin 6 approach a high logic level. The waveform labeled $V_{PGM}$ in Fig. 3 corresponds to the voltage output by inverter 82 in Fig. 1 assuming that a diode has been connected as suggested. In this case, the level shifting circuitry formed by MOSFET 72 and MOSFET 78 in Fig. 1 is selected such that the $V_{PGM}$ voltage does not switch to a high level until the $\overline{\text{RESET}}$ input voltage has reached $V_{RP}$ which, in the preferred embodiment, is roughly 2.8 volts. Since $V_{MODL}$ switches to a low level prior to the time that $V_{PGM}$ switches to a high level, the mole programming latch register properly latches a low logic level.

Fig. 4 is a block diagram illustrating an application of the preferred embodiment of the invention. A plurality of input/output circuit blocks 172, 174, 176, and 178 are coupled to a plurality of input/output terminals 180, 182, 184, and 186 respectively. Input/output blocks 172, 174, 176, and 178 are coupled to conductors 188, 190, 192 and 194, respectively, which form an internal digital bus within the data processor. Three mode programming latches 196, 198, and 200 are coupled to terminals 180, 182, and 184 in order to form a three bit mode programming latch register. The output of the mode programming latch register is coupled to a mode select decode block 202 by conductors 204, 206 and 208. Mode select decode block 202 decodes one of eight possible modes of operation and generates a plurality of control signals for configuring the data processor into the selected mode. However, those skilled in the art will realize that mode select decode block 202 may also be used to control various other functions within a data processor such as modifying the instruction set of a data processor by controlling the decoding of instructions in the data processor instruction register.

**Claims**

1. A data processor of the type which includes storage elements for storing digital information, the data processor including reset circuitry (106) for receiving a reset signal, the reset circuitry being responsive to the reset signal for causing the storage elements to store predetermined digital information and for initiating execution of instructions stored in a memory, the data processor also including input/output circuitry (2) having at least one terminal (6) for transmitting at least one digital signal, the at least one digital signal having first and second logic states, characterized by: mode selection circuitry (4,108) coupled to the at least one terminal (6) and being responsive to the reset signal for storing the logic state of the at least one digital signal immediately prior to the initiation of execution of the instructions stored in the memory.

2. A data processor as claimed in claim 1 wherein the mode selection circuitry is characterized by at least one latch circuit (90, 92, 96) coupled to the at least one terminal and being suitable for storing a logic state.

3. A data processor as claimed in claim 2 wherein the mode selection circuitry is further characterized by a voltage level detector (108) coupled to the reset circuitry and responsive to the reset signal for detecting the receipt of the reset signal and for selectively coupling the latch circuit to the at least one terminal when the receipt of the reset signal is detected such that the latch circuit is caused to store the logic state of the at least one digital signal.

4. A circuit adapted for implementation within an integrated circuit data processor and suitable for selecting a mode of operation for the data processor, including;

a first terminal (98) for receiving a reset signal, the reset signal having a voltage ranging between a first and a second voltage level; and

reset circuitry (106) coupled to the first terminal and responsive to the reset signal for generating a control signal when the reset signal voltage reaches a first predetermined voltage, the control signal being operative to initialize the data processor; characterized by:

a) a second terminal (6) capable of receiving a mode selection signal as a voltage, the mode selection signal having first and second logic states; and

b) mode selection circuitry (4,108) coupled to the first terminal and coupled to the second terminal, the mode selection circuitry including a level detector for generating an output signal when the reset signal voltage equals a second predetermined voltage, and the mode selection circuitry also including storage circuitry (90, 92, 96) responsive to the output signal for storing the logic state of the mode selection signal when the output signal is generated.

5. A circuit as claimed in claim 4 characterized in that the second terminal is adapted for transmitting digital information between the data processor and external circuitry.

6. A circuit as claimed in claim 5 characterized in that the first and second predetermined voltages are selected such that the output signal is generated before the control signal is generated during transitions of the reset signal from the first to the second voltage level.

7. A circuit as claimed in claim 6 wherein the level detector is characterized by a differential amplifier and a source of a reference voltage, (146), the differential amplifier including first and second MOSFET devices (140, 142) each having at least a source terminal and a gate terminal, the gate terminal of the first MOSFET device (140) being coupled to the first terminal, the gate terminal of the second MOSFET device being coupled to the source of the reference voltage, and the source terminals of the first and second MOSFET devices being coupled in common with each other.

8. A circuit as claimed in claim 7 characterized in that the reference voltage is substantially equal to the second predetermined voltage.

9. A circuit as claimed in claim 5 characterized in that the mode selection circuitry further includes level-shifting circuitry (72, 78) coupled to the second terminal for generating a shifted selection signal having a voltage which is offset from the voltage of the mode selection signal, and circuitry (86) for selectively coupling the shifted selection signal to the storage circuitry.

10. A circuit as claimed in claim 9 further characterized by a diode (100) coupled between the first and second terminals for causing the logic state of the mode selection signal to correspond to the voltage of the reset signal.

**Revendications**

1. Dispositif de traitement de données du type qui comporte des éléments de mémorisation pour mémoriser des informations numériques, le dispositif de traitement de données comportant un circuit de mise à zéro (106) pour recevoir un signal de mise à zéro, le circuit de mise à zéro réagissant au signal de mise à zéro en commandant les éléments de mémorisation pour mémoriser des informations numériques prédéterminées et pour déclencher l'exécution d'instructions mémorisées dans une mémoire, le dispositif de traitement de données comportant également un circuit d'entrée/sortie (2) avec au moins une borne (6) pour transmettre au moins un signal numérique, ledit au moins un signal numérique ayant des premier et second états logiques, caractérisé par un circuit de sélection de mode (4, 108) couplé avec ladite au moins une borne (6) et réagissant au signal de mise à zéro en mémorisant l'état logique dudit au moins un signal numérique immédiatement avant le déclenchement de l'exécution des instructions mémorisées dans la mémoire.

2. Dispositif de traitement de données selon la revendication 1, dans lequel le circuit de sélection de mode se caractérise par au moins un circuit de verrouillage (90, 92, 96) couplé avec ladite au moins une borne et convenant pour mémoriser un état logique.

3. Dispositif de traitement de données selon la revendication 2, dans lequel le circuit de sélection de mode se caractérise par un détecteur de niveau de tension (108) couplé avec le circuit de mise à zéro et réagissant au signal de mise à zéro en détectant la réception du signal de mise à zéro et en couplant sélectivement le circuit de verrouillage à ladite au moins une borne quand la réception du signal de mise à zéro est détectée de manière que le circuit de verrouillage soit commandé pour mémoriser l'état logique dudit au moins un signal numérique.

4. Circuit adapté pour être réalisé dans un dispositif de traitement de données en circuits intégrés et convenant pour sélectionner un mode de fonctionnement dudit dispositif de traitement de données, comportant une première borne (98) pour recevoir un signal de mise à zéro, le signal de mise à zéro ayant une tension se situant entre un premier et un second niveau de tension et un circuit de mise à zéro (106) couplé avec la première borne et réagissant au signal de mise à zéro en produisant un signal de commande quand la tension du signal de mise à zéro atteint une première tension prédéterminée, le signal de commande ayant pour fonction d'initialiser le dispositif de traitement de données, caractérisé par une seconde borne (6) susceptible de recevoir un signal de sélection de mode comme une tension, le signal de sélection de mode ayant des premier et second états logiques, et un circuit de sélection de mode (4, 108) couplé avec la première borne et couplé avec la seconde borne, le circuit de sélection de mode comprenant un détecteur de niveau qui produit un signal de sortie quand la tension du signal de mise à zéro est égale à une seconde tension prédéterminée, et le circuit de sélection de mode comportant également un circuit de mémorisation (90, 92, 96) réagissant au signal de sortie en mémorisant l'état logique du signal de sélection de mode quand le signal de sortie est produit.

5. Circuit selon la revendication 4, caractérisé en ce que la seconde borne est adaptée pour transmettre des informations numériques entre le dispositif de traitement de données et un circuit extérieur.

6. Circuit selon la revendication 5, caractérisé en ce que les première et seconde tensions prédéterminées sont choisies de manière que le signal de sortie soit produit avant que le signal de commande ne soit produit pendant des transitions du signal de mise à zéro du premier au second niveau de tension.

7. Circuit selon la revendication 6, dans lequel le détecteur de niveau est caractérisé par un amplificateur différentiel et une source de tension de référence (146), l'amplificateur différentiel comprenant des premier et second composants MOSFET (140, 142) avec chacun au moins une borne de source et une borne de grille, la borne de grille du premier composant MOSFET (140) étant couplée avec la première borne, la borne de grille du second composant MOSFET étant couplée avec la source de tension de référence et les bornes de source des premier et second composants MOSFET étant couplées en common l'une avec l'autre.

8. Circuit selon la revendication 7, caractérisé en ce que la tension de référence est pratiquement égale à la seconde tension prédéterminée.

9. Circuit selon la revendication 5, caractérisé en ce que le circuit de sélection de mode comporte en outre un circuit de décalage de niveau (72, 78) couplé avec la seconde borne pour produire un signal de sélection décalé dont la tension est décalée par rapport à la tension du signal de sélection de mode et un circuit (86) pour coupler sélectivement le signal de sélection décalé avec le circuit de mémorisation.

10. Circuit selon la revendication 9, caractérisé par une diode (100) couplée entre les première et seconde bornes pour que l'état logique du signal de sélection de mode corresponde à la tension du signal de mise à zéro.

## Patentansprüche

1. Eine Datenverarbeitungsanlage der Art, die Speicherelemente zur Speicherung digitaler Information aufweist, wobei die Datenverarbeitungsanlage eine Rücksetz-Schaltung (106) zum Empfangen eines Rücksetzsignals aufweist, wobei die Rücksetz-Schaltung auf das Rücksetzsignal reagiert, um zu bewirken, daß die Speicherelemente eine vorbestimmte digitale Information speichern, und um eine Ausführung von in einem Gedächtnis gespeicherten Befehlen in Gang zu bringen, wobei die Datenverarbeitungsanlage ebenso eine Eingangs/Ausgangs-Schaltung (2) aufweist, die mindestens einen Anschluß (6) zur Übertragung mindestens eines digitalen Signals hat, wobei das mindestens eine digitale Signal einen ersten und einen zweiten logischen Zustand hat, gekennzeichnet durch:
eine Betriebsartauswahlschaltung (4, 108), die mit dem mindestens einem Anschluß (6) verbunden ist und auf das Rücksetzsignal zum Speichern des logischen Zustandes des mindestens einen digitalen Signals unmittelbar vor dem Ingangsetzen der Ausführung der in dem Gedächtnis gespeicherten Befehle reagiert.

2. Eine Datenverarbeitungsanlage nach Anspruch 1, in der die Betriebsartauswahlschaltung gekennzeichnet ist durch mindestens eine Halteschaltung (90, 92, 96), die an den mindestens einen Anschluß angeschlossen ist und zur Speicherung eines logischen Zustandes geeignet ist.

3. Eine Datenverarbeitungsanlage nach Anspruch 2, in der die Betriebsartauswahlschaltung ferner gekennzeichnet ist durch eine Spannungspegelerfassung (108), die an die Rücksetzschaltung angeschlossen ist und auf das Rücksetzsignal zum Erfassen des Empfangs des Rücksetzsignals und zum wahlweisen Verbinden der Halteschaltung mit dem mindestens einen Anschluß reagiert, wenn der Empfang des Rücksetzsignals in der Weise erfaßt ist, daß die Halteschaltung zum Speichern des logischen Zustandes des mindestens einen digitalen Signals veranlaßt ist.

4. Eine Schaltung, geeignet zur Ausführung innerhalb einer als integrierte Schaltung ausgeführten Datenverarbeitungsanlage und geeignet zur Auswahl einer Betriebsart für die Datenverarbeitungsanlage, beinhaltet folgendes;
einen ersten Anschluß (98) zum Empfangen eines Rücksetzsignals, wobei das Rücksetzsignal eine Spannung hat, die sich zwischen einem ersten und einem zweiten Spannungspegel bewegt; und
eine Rücksetzschaltung (106), die an den ersten Anschluß angeschlossen ist und auf das Rücksetzsignal zur Erzeugung eines Steuersignals reagiert, wenn die Spannung des Rücksetzsignals eine erste vorbestimmte Spannung erreicht, wobei das Steuersignal wirksam ist, um die Datenverarbeitungsanlage in eine Anfangsstellung zu bringen; gekennzeichnet durch;

a) einen zweiten Anschluß (6), der zum Empfangen eines Betriebsartauswahlsignals wie einer Spannung geeignet ist, wobei des Betriebsartauswahlsignal einen ersten und zweiten logischen Zustand hat; und

b) eine Betriebsartauswahlschaltung (4, 108), die an dem ersten Anschluß angeschlossen ist und an dem zweiten Anschluß angeschlossen ist, wobei die Betriebsartauswahlschaltung eine Pegelerfassung zur Erzeugung eines ausgangssignals aufweist, wenn die Rücksetzsignalspannung einer zweiten vorbestimmten Spannung gleicht, und wobei die Betriebsartauswahlschaltung ebenso eine Speicherschaltung (90, 92, 96) aufweist, die auf das Ausgangssignal zur Speicherung des logischen Zustandes des Betriebsartauswahlsignals reagiert, wenn das Ausgangssignal erzeugt wird.

5. Eine Schaltung nach Anspruch 4, dadurch gekennzeichnet, daß der zweite Anschluß zur Übertragung digitaler Information zwischen der Datenverarbeitungsanlage und einer äußeren Schaltung geeignet ist.

6. Eine Schaltung nach Anspruch 5, dadurch gekennzeichnet, daß die ersten und zweiten vorbestimmten Spannungen in der Weise ausgewählt werden, daß das Ausgangssignal erzeugt wird, bevor das Steuersignal während der Übergänge des Rücksetzsignals von dem ersten auf den zweiten Spannungspegel erzeugt wird.

7. Eine Schaltung nach Anspruch 6, in der die Pegelerfassung durch einen Differentialverstärker und eine Quelle einer Referenzspannung (146) gekennzeichnet ist, wobei der Differentialverstärker erste und zweite MOSFET-Einrichtungen (140, 142) beinhaltet, von denen jede wenigstens einen Quellenanschluß (Source) und einen Gitteranschluß (Gate) hat, wobei der Gitteranschluß der ersten MOSFET-Einrichtung (140) an den ersten Anschluß angeschlossen ist, der Gitteranschluß der zweiten MOSFET-Einrichtung an die Quelle der Referenzspannung angeschlossen ist und die Quellenanschlüsse der ersten und zweiten MOSFET-Einrichtungen miteinander verbunden sind.

8. Eine Schaltung nach Anspruch 7, dadurch gekennzeichnet, daß die Referenzspannung im wesentlichen der zweiten vorbestimmten Spannung gleicht.

9. Eine Schaltung nach Anspruch 5, dadurch gekennzeichnet, daß die Betriebsartauswahlschaltung ferner eine pegelverschiebende Schaltung (72, 78) aufweist, die an den zweiten Anschluß angeschlossen ist, um ein verschobenes Auswahlsignal zu erzeugen, das eine Spannung hat, die von der Spannung des Betriebsartauswahlsignals beabstandet ist, und eine Schaltung (86) aufweist, um das verschobene Auswahlsignal wahlweise an die Speicherschaltung anzuschliessen.

10. Eine Schaltung nach Anspruch 9, ferner gekennzeichnet durch eine Diode (100), die zwischen den ersten und zweiten Anschlüssen angeschlossen ist, un zu bewirken, daß der logische Zustand des Betriebsartauswahlsignals der Spannung des Rücksetzsignals entspricht.

0 009 862

Fig 1

*Fig 2*

0 009 862

**Fig 3**

**Fig 4**